# EUROPÄISCHE PATENTANMELDUNG

(11) **EP 1 858 282 A1**
(43) Veröffentlichungstag der Anmeldung: **21.11.2007**
(21) Anmeldenummer: 06009669.0
(22) Anmeldetag: 10.05.2006
(51) Int. Cl.: H04Q 7/38

(54) **Handover in einem Funkkommunikationssystem**

(71) Anmelder: NOKIA SIEMENS NETWORKS GMBH & CO. KG, 81541 München (DE)
(72) Erfinder: Breuer, Volker, Dr., 16727 Bötzow (DE); Lamprecht, Frank, 10439 Berlin (DE)

(57) **Zusammenfassung**

Die Erfindung betrifft ein Verfahren zur Kommunikation per Funk, bei dem eine erste netzseitige Funkstation (BS1) einer Teilnehmerstation (MS) Funkressourcen zuweist und mit der Teilnehmerstation (MS) unter Verwendung eines Teils der Funkressourcen kommuniziert. Eine zweite netzseitige Funkstation (BS2) sendet unter Verwendung eines anderen Teils der Funkressourcen ein ausschließlich für die Teilnehmerstation (MS) bestimmtes Signalisierungssignal. Die erste netzseitige Funkstation (BS1) und/oder die zweite netzseitige Funkstation (BS2) empfängt eine den Empfang des Signalisierungssignals bestätigende Nachricht (REC) der Teilnehmerstation (MS). Auf die Nachricht der Teilnehmerstation (MS) hin erfolgt ein Handover der Kommunikation der Teilnehmerstation (MS) von der ersten netzseitigen Funkstation (BS1) zu der zweiten netzseitigen Funkstation (BS2). Weiterhin betrifft die Erfindung eine Teilnehmerstation (MS) und ein Funkkommunikationssystem zur Durchführung des Verfahrens.

## Beschreibung

Die Erfindung betrifft ein Verfahren zur Kommunikation per Funk, bei dem ein Handover einer Teilnehmerstation von einer ersten zu einer zweiten netzseitigen Funkstation erfolgt.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Derzeitige Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen existieren drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Um eine möglichst effiziente Übertragung von Daten zu erreichen, kann man das gesamte zur Verfügung stehende Frequenzband in mehrere Subbänder (Multicarrier- bzw. Mehrträgerverfahren) zerlegen. Die den Mehrträgersystemen zugrunde liegende Idee ist es, das Ausgangsproblem der Übertragung eines breitbandigen Signals in die Übertragung mehrerer schmalbandiger Signale zu überführen. Die Aufteilung der verfügbaren Bandbreite in mehrere schmalbandige Subbänder ermöglicht eine deutlich höhere Granularität der Datenübertragung hinsichtlich der Verteilung der zu übertragenden Daten auf die unterschiedlichen Subbänder, d.h. die Funkressourcen können mit einer großen Feinheit auf die zu übertragenden Daten bzw. auf die Teilnehmerstationen verteilt werden. Ein Beispiel für ein Mehrträgerübertragungsverfahren ist OFDM (Orthogonal Frequency Division Multiplexing), bei welchem für die Subbänder zeitlich annähernd rechteckige Pulsformen verwendet werden. Der Frequenzabstand der Subbänder wird derart gewählt, dass im Frequenzraum bei derjenigen Frequenz, bei welcher das Signal eines Subbands ausgewertet wird, die Signale der anderen Subbänder einen Nulldurchgang aufweisen. Somit sind die Subbänder orthogonal zueinander.

Sind in einem Funkkommunikationssystem mehrere netzseitige Funkstationen vorhanden, so ist es aufgrund der Mobilität von Teilnehmerstationen vorteilhaft, wenn ein Handover einer Teilnehmerstation von einer ersten zu einer zweiten netzseitigen Funkstation möglich ist, ohne dass die Kommunikation der Teilnehmerstation abgebrochen werden muss. Bei einem so genannten Hard Handover kommuniziert die Teilnehmerstation vor dem Handover mit der ersten netzseitigen Funkstation und nach dem Handover mit der zweiten netzseitigen Funkstation; eine gleichzeitige Verbindung der Teilnehmerstation zu beiden netzseitigen Funkstation existiert demnach nicht.

Der Erfindung liegt die Aufgabe zugrunde, Verfahren zur Kommunikation per Funk vorzustellen, bei welchen ein Handover einer Teilnehmerstation von einer ersten zu einer zweiten netzseitigen Funkstation erfolgt. Weiterhin sollen eine Teilnehmerstation und ein Funkkommunikationssystem zur Durchführung der Verfahren vorgestellt werden.

Diese Aufgabe wird durch ein Verfahren mit den Merkmalen des Anspruchs 1, sowie durch ein Verfahren und durch Vorrichtungen mit Merkmalen von nebengeordneten Ansprüchen gelöst. Vorteilhafte Ausgestaltungen und Weiterbildungen sind Gegenstand von Unteransprüchen.

Bei dem ersten erfindungsgemäßen Verfahren zur Kommunikation per Funk weist eine erste netzseitige Funkstation einer Teilnehmerstation Funkressourcen zu und kommuniziert mit der Teilnehmerstation unter Verwendung eines Teils der Funkressourcen. Eine zweite netzseitige Funkstation sendet unter Verwendung eines anderen Teils der Funkressourcen ein ausschließlich für die Teilnehmerstation bestimmtes Signalisierungssignal. Die erste netzseitige Funkstation und/oder die zweite netzseitige Funkstation empfängt eine den Empfang des Signalisierungssignals bestätigende Nachricht der Teilnehmerstation. Auf die Nachricht der Teilnehmerstation hin erfolgt ein Handover der Kommunikation der Teilnehmerstation von der ersten zu der zweiten netzseitigen Funkstation.

Bei dem zweiten erfindungsgemäßen Verfahren zur Kommunikation per Funk empfängt eine Teilnehmerstation von einer ersten netzseitigen Funkstation Informationen betreffend eine Zuweisung von Funkressourcen an die Teilnehmerstation und kommuniziert mit der ersten netzseitigen Funkstation unter Verwendung eines Teils der Funkressourcen. Die Teilnehmerstation empfängt unter Verwendung eines anderen Teils der Funkressourcen ein ausschließlich für die Teilnehmerstation bestimmtes Signalisierungssignal von einer zweiten netzseitigen Funkstation. Die Teilnehmerstation sendet eine den Empfang des Signalisierungssignals bestätigende Nachricht an die erste netzseitige Funkstation und/oder die zweite netzseitige Funkstation. Es erfolgt ein Handover der Kommunikation der Teilnehmerstation von der ersten zu der zweiten netzseitigen Funkstation.

Es wird eine Nachricht von der ersten netzseitigen Funkstation zu der Teilnehmerstation gesendet, mit welcher der Teilnehmerstation Funkressourcen zugewiesen werden. Für die Kommunikation zwischen der ersten netzseitigen Funkstation und der Teilnehmerstation werden jedoch diese Funkressourcen nicht vollständig verwendet, sondern lediglich ein Teil dieser Funkressourcen. Dies bedeutet, dass der Teilnehmerstation zugewiesene Funkressourcen existieren, welche aus Sicht der ersten netzseitigen Funkstation frei bzw. unbenutzt sind. Diese freien Funkressourcen werden vollständig oder teilweise von der zweiten netzseitigen Funkstation zur Ausstrahlung eines Signalisierungssignals eingesetzt. Das Signalisierungssignal ist ausschließlich für die Teilnehmerstation bestimmt, d.h. die Teilnehmerstation ist der einzige Adressat des Signalisierungssignals, andere Teilnehmerstationen benötigen und verwenden dieses nicht.

Die Teilnehmerstation informiert eine oder beide der netzseitigen Funkstationen darüber, dass sie das Signalisierungssignal der zweiten netzseitigen Funkstation empfangen hat. Das Handover erfolgt auf diese Bestätigung der Teilnehmerstation hin. Es handelt sich hierbei um ein Hard Handover, d.h. der von der Teilnehmerstation in Anspruch genommene Dienst wird vor dem Handover von der ersten netzseitigen Funkstation zur Verfügung gestellt, und nach dem Handover von der zweiten netzseitigen Funkstation zur Verfügung gestellt, ohne dass dieses Zur-Verfügung-Stellen durch die beiden netzseitigen Funkstationen gleichzeitig erfolgt.

In Weiterbildung der Erfindung erfolgt die Kommunikation zwischen der Teilnehmerstation und der ersten netzseitigen Funkstation gleichzeitig zur Versendung des Signalisierungssignals durch die zweite netzseitige Funkstation. Aus Sicht der Teilnehmerstation empfängt diese somit Nachrichten von der ersten netzseitigen Funkstation und/oder versendet Nachrichten an die erste netzseitige Funkstation, während sie gleichzeitig das Signalisierungssignal von der zweiten netzseitigen Funkstation empfängt. Dies wird dadurch ermöglicht, dass kein Überlapp zwischen dem für die Kommunikation mit der ersten netzseitigen Funkstation verwendeten Teil der Funkressourcen und dem von der zweiten netzseitigen Funkstation für das Signalisierungssignal verwendeten anderen Teil der Funkressourcen besteht.

Einer besonders bevorzugten Ausführungsform der Erfindung gemäß handelt es sich bei den Funkressourcen um eine Mehrzahl von Subbändern eines Frequenzbandes. Die erste netzseitige Funkstation verwendet eines oder mehrere dieser Subbänder zur Kommunikation mit der Teilnehmerstation, und die zweite netzseitige Funkstation verwendet eines oder mehrere dieser Subbänder zur Ausstrahlung des Signalisierungssignals, wobei keine Überschneidung zwischen den von der ersten und der zweiten netzseitigen Funkstation genutzten Subbändern besteht. Vorteilhaft ist es, wenn jedes der Teilnehmerstation von der ersten netzseitigen Funkstation zugewiesene Subband entweder von der ersten netzseitigen Funkstation zur Kommunikation mit der Teilnehmerstation oder von der zweiten netzseitigen Funkstation zur Versendung des Signalisierungssignals verwendet wird. Vorzugsweise handelt es sich bei den Subbänder um einen Block aus im Frequenzbereich benachbarten Subbändern. Zusätzlich zu den Subbändern können die Funkressourcen Zeitabschnitte umfassen.

In Weiterbildung der Erfindung handelt es sich bei dem Signalisierungssignal der zweiten netzseitigen Funkstation um ein Synchronisationssignal. Dieses Synchronisationssignal kann der Frequenzsynchronisation, vorzugsweise jedoch zumindest auch der Zeitsynchronisation dienen. Es ist vorteilhaft, wenn die Teilnehmerstation unter Verwendung des Synchronisationssignals eine die Kommunikation mit der zweiten netzseitigen Funkstation ermöglichende Synchronisation durchführt. In diesem Fall dient die Synchronisation der Vorbereitung der Kommunikation zwischen der Teilnehmerstation und der zweiten netzseitigen Funkstation, sie ist notwendige Voraussetzung hierfür. Dadurch, dass die Synchronisation erfolgen kann, während die Kommunikation der Teilnehmerstation noch über die erste netzseitige Funkstation erfolgt, kann erreicht werden, dass ein verzögerungsfreies Umschalten der Kommunikation von der ersten zu der zweiten netzseitigen Funkstation möglich ist.

Einer Ausgestaltung der Erfindung gemäß beendet die zweite netzseitige Funkstation aufgrund des Handovers die Versendung des Signalisierungssignals. Das Signalisierungssignal wird also dann, wenn die Teilnehmerstation bereits mit der zweiten netzseitigen Funkstation kommuniziert, nicht mehr ausgestrahlt.

Mit Vorteil kann unmittelbar nach dem Handover die Kommunikation zwischen der Teilnehmerstation und der zweiten netzseitigen Funkstation unter Verwendung des anderen Teils der Funkressourcen erfolgen. Somit empfängt die Teilnehmerstation zuerst das Signalisierungssignal auf dem anderen Teil der Funkressourcen, und im Anschluss wird die Kommunikation der Teilnehmerstation auf diesen gleichen Funkressourcen fortgesetzt. Dies hat den Vorteil, dass unmittelbar nach dem Handover keine Neuzuweisung von Funkressourcen nötig ist, bevor die Kommunikation fortgesetzt werden kann. Außerdem kann hierdurch erreicht werden, dass für die Kommunikation zwischen der Teilnehmerstation und der zweiten netzseitigen Funkstation keine Funkressourcen verwendet werden, welche auch die erste netzseitige Funkstation verwendet, so dass Interferenzen vermieden werden. Es ist daher auch vorteilhaft, den anderen Teil der Funkressourcen so zu bestimmen, dass die Kommunikation der Teilnehmerstation nach dem Handover in gleichem oder ähnlichem Umfang im Vergleich zum Zustand vor dem Handover fortgesetzt werden kann.

In Weiterbildung der Erfindung sendet die erste netzseitige Funkstation der zweiten netzseitigen Funkstation vor der Versendung des Signalisierungssignals durch die zweite netzseitige Funkstation Informationen betreffend den anderen Teil der Funkressourcen. Es ist vorteilhaft, wenn die erste netzseitige Funkstation oder eine mit ihr verbundene Einrichtung darüber entscheidet, welche Funkressourcen die zweite netzseitige Funkstation für die Versendung des Signalisierungssignals einsetzen darf. Über die erfolgte Entscheidung kann die zweite netzseitige Funkstation dann von der ersten netzseitigen Funkstation informiert werden. Die Übertragung der Informationen betreffend den anderen Teil der Funkressourcen kann direkt zwischen der ersten und der zweiten netzseitigen Funkstation erfolgen, oder über eine oder mehrere, vorzugsweise ausschließlich netzseitige, weiterleitende Einrichtungen. Vorteilhaft ist es, wenn die Informationen betreffend den anderen Teil der Funkressourcen zwar an die zweite netzseitige Funkstation, nicht aber an die Teilnehmerstation gesendet werden. Denn die Teilnehmerstation kennt die ihr von der ersten netzseitigen Funkstation zugewiesenen Funkressourcen, wovon der andere Teil eine Teilmenge ist. Vorteilhaft ist es, wenn die zweite netzseitige Funkstation nach dem Empfang der Informationen betreffend den anderen Teil der Funkressourcen mit der Versendung des Signalisierungssignals beginnt. Die Informationen von der ersten netzseitigen Funkstation stellen in diesem Fall eine Erlaubnis oder Anweisung dar, das Signalisierungssignal für die Teilnehmerstation auszustrahlen.

Einer Weiterbildung der Erfindung gemäß weist die zweite netzseitige Funkstation der Teilnehmerstation nach dem Handover von den Funkressourcen unterschiedliche Funkressourcen zu. Diese neu zugewiesenen Funkressourcen können sich hierbei vollständig von den von der ersten netzseitigen Funkstation zugewiesenen Funkressourcen unterscheiden, es kann jedoch auch ein Überlapp zwischen den neuen und den vorher zugewiesenen Funkressourcen bestehen.

In Ausgestaltung der Erfindung empfängt die erste netzseitige Funkstation vor der Zuweisung der Funkressourcen eine Nachricht von der Teilnehmerstation betreffend das Handover der Kommunikation der Teilnehmerstation von der ersten zu der zweiten netzseitigen Funkstation. Diese Nachricht der Teilnehmerstation kann einen Trigger für die folgenden Verfahrensschritte darstellen. Die Nachricht der Teilnehmerstation gibt vorzugsweise Identifikationsinformationen der zweiten netzseitigen Funkstation an; es können Messwerte, welche die Teilnehmerstation an Signalen der zweiten netzseitigen Funkstation durchgeführt hat, enthalten sein.

Es ist möglich, dass vor der Zuweisung der Funkressourcen eine Kommunikation zwischen der ersten netzseitigen Funkstation und der Teilnehmerstation unter Verwendung von von den Funkressourcen unterschiedlichen Funkressourcen erfolgt. In diesem Fall kann die Zuweisung der Funkressourcen aufgrund des anstehenden Handovers erfolgen. Es können hierfür Funkressourcen ausgewählt werden, welche sich besonders für ein Handover zu der zweiten netzseitigen Funkstation eignen, indem z.B. Subbänder ausgewählt werden, welche in der Nähe der von der zweiten netzseitigen Funkstation verwendeten Subbänder liegen.

In Weiterbildung der Erfindung empfängt die erste netzseitige Funkstation die den Empfang des Signals bestätigende Nachricht der Teilnehmerstation und sendet der zweiten netzseitigen Funkstation eine Anweisung zur Durchführung des Handovers. Umgekehrt ist es auch möglich, dass die zweite netzseitige Funkstation die den Empfang des Signals bestätigende Nachricht der Teilnehmerstation empfängt und der ersten netzseitigen Funkstation eine Anweisung zur Durchführung des Handovers sendet. Die Anweisung zur Durchführung des Handovers fordert die jeweils andere netzseitige Funkstation auf, ihre Teilschritte des Handovers durchzuführen. In Bezug auf eine Anweisung an die erste netzseitige Funkstation kann dies z.B. eine Weiterleitung von an die Teilnehmerstation zu versendende Daten an die zweite netzseitige Funkstation umfassen, sowie eine Beendigung der Kommunikation mit der Teilnehmerstation. In Bezug auf eine Anweisung an die zweite netzseitige Funkstation kann dies z.B. eine Beendigung der Ausstrahlung des Signalisierungssignals umfassen, sowie ein Beginnen der Kommunikation mit der Teilnehmerstation.

Bei der Kommunikation der Teilnehmerstation handelt es sich vorzugsweise um eine Kommunikation in Abwärtsrichtung, d.h. um eine Nachrichtenversendung von der jeweiligen netzseitigen Funkstation an die Teilnehmerstation. Alternativ kann es sich um eine Kommunikation in Aufwärtsrichtung oder um eine Kommunikation in Abwärts- und Aufwärtsrichtung handeln.

Die erfindungsgemäße Teilnehmerstation zur Kommunikation per Funk umfasst Mittel zum Empfangen von Informationen von einer ersten netzseitigen Funkstation betreffend eine Zuweisung von Funkressourcen an die Teilnehmerstation und Mittel zum Kommunizieren mit der ersten netzseitigen Funkstation unter Verwendung eines Teils der Funkressourcen, sowie Mittel zum Empfangen unter Verwendung eines anderen Teils der Funkressourcen eines ausschließlich für die Teilnehmerstation bestimmten Signalisierungssignals von einer zweiten netzseitigen Funkstation, und Mittel zum Senden einer den Empfang des Signalisierungssignals bestätigenden Nachricht an die erste und/oder die zweite netzseitige Funkstation, sowie schließlich Mittel zum Durchführen eines Handovers der Kommunikation der Teilnehmerstation von der ersten zu der zweiten netzseitigen Funkstation.

Das erfindungsgemäße Funkkommunikationssystem umfasst eine erste und eine zweite netzseitige Funkstation. Es sind Mittel der ersten netzseitigen Funkstation vorhanden zum Zuweisen von Funkressourcen an eine Teilnehmerstation und zum Kommunizieren mit der Teilnehmerstation unter Verwendung eines Teils der Funkressourcen, sowie Mittel der zweiten netzseitigen Funkstation zum Versenden eines ausschließlich für die Teilnehmerstation bestimmten Signalisierungssignals unter Verwendung eines anderen Teils der Funkressourcen, und Mittel der ersten und/oder der zweiten netzseitigen Funkstation zum Empfangen einer den Empfang des Signalisierungssignals bestätigenden Nachricht der Teilnehmerstation, und Mittel der ersten und der zweiten netzseitigen Funkstation zum Durchführen eines Handovers der Kommunikation der Teilnehmerstation von der ersten zu der zweiten netzseitigen Funkstation auf die Nachricht der Teilnehmerstation hin.

Die erfindungsgemäße Teilnehmerstation und das erfindungsgemäße Funkkommunikationssystem eignen sich insbesondere zur Durchführung der erfindungsgemäßen Verfahren, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Mobilfunkkommunikationssystem,
- Figur 2:: ein Frequenzband,
- Figur 3:: ein Ablaufdiagramm.

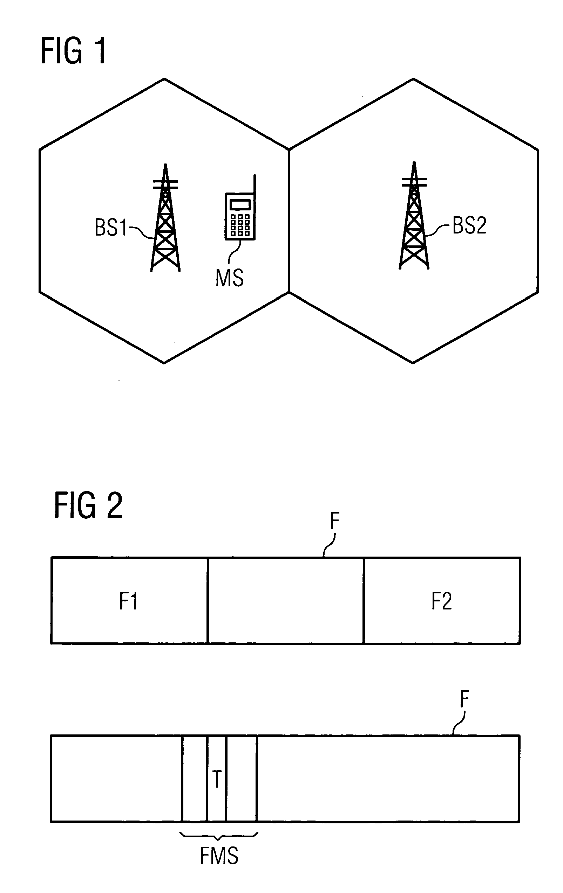

Der in Figur 1 dargestellte Ausschnitt aus einem Mobilfunkkommunikationssystem zeigt die Funkzellen der beiden benachbarten netzseitigen Funkstationen BS1 und BS2, vereinfachend als Sechsecke dargestellt. In der Funkzelle der ersten netzseitigen Funkstation BS1 befindet sich die Teilnehmerstation MS. Aus Gründen der Übersichtlichkeit sind weitere netzseitige Einrichtungen und weitere Teilnehmerstationen nicht dargestellt. Bei dem betrachteten Mobilfunkkommunikationssystem handelt es sich vorzugsweise um ein 3G LTE (LTE: Long Term Evolution) System. Die Erfindung ist jedoch auch auf andere Funkkommunikationssysteme anwendbar.

In dem betrachteten Funkkommunikationssystem steht ein in Figur 2 gezeigtes Frequenzband F zur Verfügung, welches - nicht dargestellt - in eine Vielzahl von Subbändern aufgeteilt ist. Signale können zwischen einer netzseitigen Funkstation BS1 oder BS2 und der Teilnehmerstation MS auf einem oder mehreren Subbändern übertragen werden, vorzugsweise unter Verwendung von OFDM. Um Interferenzen zu vermeiden, kommuniziert die erste netzseitige Funkstation BS1 mit Teilnehmerstationen bevorzugt in dem Frequenzabschnitt F1 des Frequenzbandes F, während die zweite netzseitige Funkstation BS2 bevorzugt in dem Frequenzabschnitt F2 Frequenzbandes F kommuniziert. Die Entscheidung darüber, welche Subbänder von den netzseitigen Funkstation jeweils verwendet werden, kann auf verschiedene Weise erfolgen, z.B. durch zentrale Vergabe oder durch Abstimmung zwischen den netzseitigen Funkstationen.

Im folgenden wird davon ausgegangen, dass es sich bei dem von der Teilnehmerstation MS aktuell genutzten Dienst um eine Kommunikation in Abwärtsrichtung handelt, d.h. um eine Nachrichtenversendung von der jeweiligen netzseitigen Funkstation zu der Teilnehmerstation MS. Die Erfindung ist jedoch nicht auf diesen Anwendungsfall beschränkt.

Die Teilnehmerstation MS ist so ausgestaltet, dass sie lediglich auf einer begrenzten Bandbreite Signale empfangen kann. Diese Bandbreite ist deutlich kleiner als die Breite des Frequenzbandes F, die Teilnehmerstation MS kann zu einem Zeitpunkt somit lediglich einen Ausschnitt aus der im System verfügbaren Bandbreite nutzen. Beispielsweise kann das Frequenzband F eine Breite von 20 MHz aufweisen und die Bandbreite der Teilnehmerstation MS 5 MHz betragen. Der Teilnehmerstation MS wird von derjenigen netzseitigen Funkstation, mit welcher sie aktuell kommuniziert, mitgeteilt, welche Frequenzlage der von ihr zu verwendende Frequenzbereich innerhalb des Frequenzbandes F hat. Ein solcher Frequenzbereich FMS ist in Figur 2 im unteren Teil dargestellt. Der von der Teilnehmerstation MS verwendete Frequenzbereich FMS bei einer Kommunikation mit der ersten netzseitigen Funkstation BS1 liegt vorzugsweise innerhalb des Frequenzabschnittes F1. Er kann jedoch ganz oder teilweise außerhalb des Frequenzabschnittes F1 liegen, wenn bestimmt oder ermittelt wird, dass die jeweiligen Subbänder von der ersten netzseitigen Funkstation BS1 verwendet werden können. Entsprechendes gilt in Bezug auf den Frequenzabschnitt F2 für eine Kommunikation zwischen der zweiten netzseitigen Funkstation BS2 und der Teilnehmerstation MS. Wenn der Teilnehmerstation MS mitgeteilt wird, dass sich die Position des von ihr zu verwendenden Frequenzbereichs ändert, erfolgt eine Neuabstimmung der Empfangseinheit der Teilnehmerstation MS, so dass nunmehr der hinsichtlich seiner Frequenzlage neue Frequenzabschnitt FMS zur Kommunikation verwendet wird.

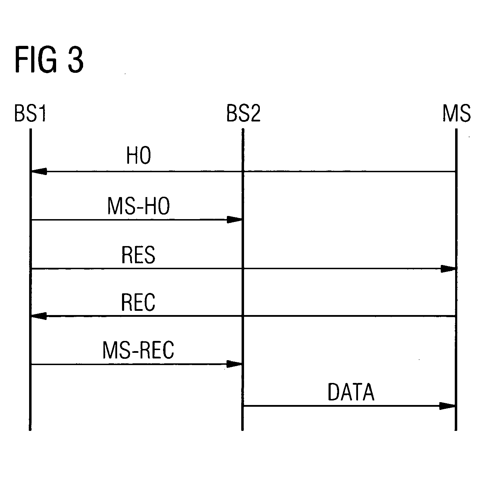

Anhand des Flussdiagramms von Figur 3 wird im folgenden ein Handover der Teilnehmerstation MS von der ersten netzseitigen Funkstation BS1 zu der zweiten netzseitigen Funkstation BS2 erläutert. Die Teilnehmerstation MS kommuniziere zu Beginn mit der ersten netzseitigen Funkstation BS1. Die Teilnehmerstation MS sendet der ersten netzseitigen Funkstation BS1 eine Nachricht HO. Die Nachricht HO zeigt an, dass ein Handover zu der zweiten netzseitigen Funkstation BS2 erfolgen soll. Diese Feststellung beruht auf Messungen, welche die Teilnehmerstation MS an Signalen der zweiten netzseitigen Funkstation BS2 durchgeführt hat. Hierzu versenden die netzseitigen Funkstationen BS1 und BS2 Pilotsignale, anhand derer Teilnehmerstationen bestimmen können, wie gut die Funkverbindung zwischen der jeweiligen Teilnehmerstation und der jeweiligen netzseitigen Funkstation BS1 bzw. BS2 ist. Von der zweiten netzseitigen Funkstation BS2 werden die Pilotsignale vorzugsweise nicht nur im Frequenzabschnitt F2, sondern verteilt über das gesamte Frequenzband F ausgestrahlt. Somit kann die Teilnehmerstation MS die Pilotsignale der zweiten netzseitigen Funkstation BS2 vermessen, während sie von der ersten netzseitigen Funkstation BS1 in dem ihr von der ersten netzseitigen Funkstation BS1 zugewiesenen Frequenzbereich FMS Nachrichten empfängt. Alternativ hierzu ist es möglich, dass die Teilnehmerstation MS den von ihr verwenden Frequenzbereich durch eine Neuabstimmung zeitweilig ändert, um Pilotsignale der zweiten netzseitigen Funkstation BS2 empfangen und vermessen zu können.

Auf die Nachricht HO hin wird von der ersten netzseitigen Funkstation BS1 entschieden, welche Lage der von der Teilnehmerstation MS während dem Handover zu verwendende Frequenzbereich FMS haben soll. Figur 2 zeigt im unteren Teil eine vorteilhafte Lage für den Frequenzbereich FMS während des Handovers: dieser befindet sich in der Nähe, im dargestellten Fall mit leichtem Überlapp, zum Frequenzabschnitt F1. Mit der Nachricht RES wird die Teilnehmerstation MS angewiesen, zu diesem Frequenzbereich FMS zu wechseln. Eine alternative Lage für den Frequenzbereich FMS während des Handovers ist die Nähe zum Frequenzabschnitt F2. Ein Wechsel der Lage des von der Teilnehmerstation MS während des Handovers zu verwendenden Frequenzbereichs FMS ist jedoch nicht grundsätzlich notwendig. Wesentlich ist, dass der Teilnehmerstation MS bekannt ist, in welchem Frequenzbereich sie während des Handovers Signale der netzseitigen Funkstationen BS1 und BS2 empfangen und auswerten muss.

Zusätzlich zur Angabe des ihr zugewiesenen Frequenzbereiches FMS kann der Teilnehmerstation MS in der Nachricht RES mitgeteilt werden, für welche Zeitabschnitte ihr diese Subbänder zugewiesen sind.

Die erste netzseitige Funkstation BS1 bestimmt einen oder mehrere Subbänder, im unteren Teil der Figur 2 mit T bezeichnet, welche in dem während dem Handover verwendeten Frequenzbereich FMS liegen. Hierbei kann es sich um ein einzelnes Subband, um eine Mehrzahl benachbarter Subbänder, oder auch um eine Mehrzahl im Frequenzbereich FMS verteilter Subbänder handeln. Aus der Sicht der ersten netzseitigen Funkstation BS1 sind dies freie Subbänder, denn die erste netzseitige Funkstation BS1 verwendet diese Subbänder nicht zur Kommunikation mit der Teilnehmerstation MS. Mittels der Nachricht MS-HO wird die zweite netzseitige Funkstation BS2 von der ersten netzseitigen Funkstation BS1 darüber informiert, dass die Teilnehmerstation MS von der ersten netzseitigen Funkstation BS1 an die zweite netzseitige Funkstation BS2 übergeben werden soll, und über die beschriebenen freien Subbänder T. Aufgrund der Nachricht MS-HO kennt die zweite netzseitige Funkstation BS2 daher die Lage der freien Subbänder T. Weiterhin kann die erste netzseitige Funkstation BS1 die zweite netzseitige Funkstation BS2 mit der Nachricht MS-HO über die Zeitabschnitte, während welchen der Teilnehmerstation MS die freien Subbänder T zugewiesen sind, informieren.

Die zweite netzseitige Funkstation BS2 beginnt nach Empfang der Nachricht MS-HO, auf den ihr mitgeteilten freien Subbändern, gegebenenfalls in den ihr mitgeteilten Zeitabschnitten, ein Synchronisationssignal auszustrahlen. Hierbei handelt es sich um ein Signal, welches der Teilnehmerstation MS als ein solches bekannt ist und welches die Teilnehmerstation MS nach dem Empfang desselben zur zeitlichen Synchronisation und/oder zur Synchronisation im Frequenzbereich auf die zweite netzseitige Funkstation BS2 verwendet. Das Synchronisationssignal kann eine bekannte Sequenz aus einem der Teilnehmerstation MS bekannten Set von Sequenzen darstellen. Alternativ kann das Synchronisationssignal aus einer Sequenz bestehen, welche unter Verwendung einer Identifikationsinformation der Teilnehmerstation MS modifiziert wurde. Hierdurch wird das Synchronisationssignal der Teilnehmerstation MS direkt zuordenbar. Letzteres kann im Falle von parallelen Handovervorgängen mehrerer Teilnehmerstationen von Vorteil sein.

Die Frequenzlage der freien Subbänder muss der Teilnehmerstation MS nicht mitgeteilt werden, da ihr sowohl das Synchronisationssignal bekannt ist, als auch die Tatsache, dass sie aufgrund ihrer Nachricht HO ein solches innerhalb ihres Frequenzbereiches FMS empfangen sollte. Die Durchführung einer Synchronisation auf die zweite netzseitige Funkstation BS2 ist erforderlich, bevor die Kommunikation der Teilnehmerstation MS an die zweite netzseitige Funkstation BS2 übergeben werden kann.

Während der Ausstrahlung des Synchronisationssignals findet weiterhin eine Kommunikation zwischen der Teilnehmerstation MS und der ersten netzseitigen Funkstation BS1 auf den restlichen Subbändern des Frequenzbereichs FMS statt, d.h. auf den Subbändern des Frequenzbereichs FMS mit Ausnahme des oder der freien Subbänder T. Es findet somit keine Unterbrechung der Kommunikation der Teilnehmerstation MS statt, während diese die Synchronisation auf die zweite netzseitige Funkstation BS2 durchführt. Dies ist insbesondere für Echtzeit-Kommunikationen von Vorteil. Im Gegensatz zu einem Soft-Handover-Verfahren, bei welchem eine Teilnehmerstation auf den ihr zugewiesenen Funkressourcen die gleichen Nachrichten von der neuen und der alten netzseitigen Funkstation empfängt, erfolgt im vorliegenden Fall durch die alte netzseitige Funkstation auf diesen Funkressourcen nach wie vor eine Versendung von Nachrichten, während die neue netzseitige Funkstation auf diesen Funkressourcen lediglich das Synchronisationssignals ausstrahlt.

Das von der zweiten netzseitigen Funkstation BS2 für die Teilnehmerstation MS ausgestrahlte Synchronisationssignal ist zu unterscheiden von einem Broadcastsignal, welches von einer netzseitigen Funkstation zu Synchronisationszwecken für eine Vielzahl von Teilnehmerstationen ausgestrahlt wird. Das betrachtete Synchronisationssignal wird lediglich während des Handovers ausgestrahlt und nach erfolgtem Handover wird die Ausstrahlung desselben beendet. Weiterhin erfolgt die Ausstrahlung nicht auf einem mehreren Teilnehmerstationen gemeinsamen Kanal, sondern auf der Teilnehmerstation MS zugewiesenen Funkressourcen.

Für die Teilnehmerstation MS bedeutet der Empfang des Synchronisationssignal der zweiten netzseitigen Funkstation BS2, dass die Funkressourcenzuweisung ab diesem Zeitpunkt nicht mehr durch die erste netzseitige Funkstation BS1, sondern durch die zweite netzseitige Funkstation BS2 erfolgt. Nachdem die Teilnehmerstation MS das Synchronisationssignal der zweiten netzseitigen Funkstation BS2 empfangen und als solches erkannt hat, führt sie wie oben erläutert die Synchronisation auf die zweite netzseitige Funkstation BS2 durch. Weiterhin sendet sie an die erste netzseitige Funkstation BS1 eine Nachricht REC. Hierdurch wird die erste netzseitige Funkstation BS1 darüber informiert, dass der Durchführung des Handovers nun nichts mehr im Wege steht. Die erste netzseitige Funkstation BS1 informiert im Anschluss die zweite netzseitige Funkstation BS2 mit der Nachricht MS-REC darüber, dass nun die Übergabe der Teilnehmerstation MS von der ersten netzseitigen Funkstation BS1 zu der zweiten netzseitigen Funkstation BS2 erfolgen kann. Es werden auch eventuell bei der ersten netzseitigen Funkstation BS1 vorhandene an die Teilnehmerstation MS zu sendende Informationen an die zweite netzseitige Funkstation BS2 weitergegeben. Weiterhin informiert die erste netzseitige Funkstation BS1 oder die zweite netzseitige Funkstation BS2 das Kernnetz darüber, dass die Kommunikation der Teilnehmerstation MS zukünftig über die zweite netzseitige Funkstation BS2 erfolgt.

Alternativ zum beschriebenen Vorgehen kann die Teilnehmerstation MS die Nachricht REC an die zweite netzseitige Funkstation BS2 senden, woraufhin diese die erste netzseitige Funkstation BS1 mittels der Nachricht MS-REC hierüber informiert.

Nach Empfang der Nachricht MS-REC beendet die zweite netzseitige Funkstation BS2 die Ausstrahlung des Synchronisationssignals. Es erfolgt nun eine Kommunikation zwischen der Teilnehmerstation MS und der zweiten netzseitigen Funkstation BS2, insbesondere eine Versendung von Nachrichten DATA mit Nutz- und/oder Signalisierungsinformationen von der zweiten netzseitigen Funkstation BS2 an die Teilnehmerstation MS. Die Kommunikation zwischen der Teilnehmerstation MS und der ersten netzseitigen Funkstation BS1 wird hierdurch fortgesetzt. Es werden zu Beginn für die Kommunikation zwischen der Teilnehmerstation MS und der zweiten netzseitigen Funkstation BS2 lediglich die freien Subbänder T eingesetzt, gegebenenfalls in Kombination mit den der Teilnehmerstation MS zugewiesenen Zeitabschnitten. Dies setzt keine Neuzuweisung von Funkressourcen an die Teilnehmerstation MS voraus, denn der Teilnehmerstation MS ist bekannt, dass sie Signale von der zweiten netzseitigen Funkstation BS2 auf diesen freien Subbändern empfängt, und gegebenenfalls auch, in welchen Zeitabschnitten sie diese Signale empfängt. Dies ist insbesondere dann vorteilhaft, wenn die zweite netzseitige Funkstation BS2 einen scheduling Kanal im Frequenzabschnitt F2 ausstrahlt, welcher für die Zuweisung von Funkressourcen durch die zweite netzseitige Funkstation BS2 an die mit ihr kommunizierenden Teilnehmerstationen verwendet wird, und welcher von der Teilnehmerstation MS im Frequenzbereich FMS nicht empfangen werden kann. Es bietet sich ferner an, die Anzahl der freien Subbänder - und gegebenenfalls auch die Anzahl der zugewiesenen Zeitspannen in Bezug auf die freien Subbänder - dem Umfang der Funkressourcen anzupassen, welchen die Teilnehmerstation MS für den von ihr genutzten Dienst benötigt.

Zu einem späteren Zeitpunkt teilt die zweite netzseitige Funkstation BS2 der Teilnehmerstation MS unter Verwendung der freien Subbänder mit, welcher Frequenzbereich FMS im folgenden für die Kommunikation zwischen der Teilnehmerstation MS und der zweiten netzseitigen Funkstation BS2 zu verwenden ist. Dieser befindet sich vorzugsweise im Frequenzabschnitt F2. Die Teilnehmerstation MS führt dementsprechend eine Neuabstimmung ihrer Empfangseinheit durch. Für die weitere Kommunikation zwischen der Teilnehmerstation MS und der zweiten netzseitigen Funkstation BS2 empfängt die Teilnehmerstation MS nun einen scheduling Kanal, welcher für die Zuweisung von Funkressourcen durch die zweite netzseitige Funkstation BS2 an die mit ihr kommunizierenden Teilnehmerstationen verwendet wird, und welcher im Frequenzabschnitt F2 übertragen wird.

## Patentansprüche

1. Verfahren zur Kommunikation per Funk, bei dem
eine erste netzseitige Funkstation (BS1) einer Teilnehmerstation (MS) Funkressourcen (FMZ) zuweist und mit der Teilnehmerstation (MS) unter Verwendung eines Teils der Funkressourcen (FMZ) kommuniziert,
eine zweite netzseitige Funkstation (BS2) unter Verwendung eines anderen Teils (T) der Funkressourcen (FMZ) ein ausschließlich für die Teilnehmerstation (MS) bestimmtes Signalisierungssignal sendet,
die erste netzseitige Funkstation (BS1) und/oder die zweite netzseitige Funkstation (BS2) eine den Empfang des Signalisierungssignals bestätigende Nachricht (REC) der Teilnehmerstation (MS) empfängt,
auf die Nachricht der Teilnehmerstation (MS) hin ein Handover der Kommunikation der Teilnehmerstation (MS) von der ersten netzseitigen Funkstation (BS1) zu der zweiten netzseitigen Funkstation (BS2) erfolgt.

2. Verfahren zur Kommunikation per Funk, bei dem
eine Teilnehmerstation (MS) von einer ersten netzseitigen Funkstation (BS1) Informationen (RES) betreffend eine Zuweisung von Funkressourcen (FMZ) an die Teilnehmerstation (MS) empfängt und mit der ersten netzseitigen Funkstation (BS1) unter Verwendung eines Teils der Funkressourcen (FMZ) kommuniziert,
die Teilnehmerstation (MS) von einer zweiten netzseitigen Funkstation (BS2) unter Verwendung eines anderen Teils (T) der Funkressourcen (FMZ) ein ausschließlich für die Teilnehmerstation (MS) bestimmtes Signalisierungssignal empfängt,
die Teilnehmerstation (MS) eine den Empfang des Signalisierungssignals bestätigende Nachricht (REC) an die erste netzseitige Funkstation (BS1) und/oder die zweite netzseitige Funkstation (BS2) sendet,
ein Handover der Kommunikation der Teilnehmerstation (MS) von der ersten netzseitigen Funkstation (BS1) zu der zweiten netzseitigen Funkstation (BS2) erfolgt.

3. Verfahren nach Anspruch 1 oder 2, bei dem
die Kommunikation zwischen der Teilnehmerstation (MS) und der ersten netzseitigen Funkstation (BS1) gleichzeitig erfolgt zur Versendung des Signalisierungssignals durch die zweite netzseitige Funkstation (BS2).

4. Verfahren nach einem der Ansprüche 1 bis 3, bei dem
es sich bei den Funkressourcen (FMZ) um eine Mehrzahl von Subbändern eines Frequenzbandes (F) handelt.

5. Verfahren nach einem der Ansprüche 1 bis 4, bei dem
es sich bei dem Signalisierungssignal der zweiten netzseitigen Funkstation (BS2) um ein Synchronisationssignal handelt.

6. Verfahren nach Anspruch 5, bei dem
die Teilnehmerstation (MS) unter Verwendung des Synchronisationssignals eine die Kommunikation mit der zweiten netzseitigen Funkstation (BS2) ermöglichende Synchronisation durchführt.

7. Verfahren nach einem der Ansprüche 1 bis 6, bei dem
die zweite netzseitige Funkstation (BS2) aufgrund des Handovers die Versendung des Signalisierungssignals beendet.

8. Verfahren nach einem der Ansprüche 1 bis 7, bei dem unmittelbar nach dem Handover die Kommunikation zwischen der Teilnehmerstation (MS) und der zweiten netzseitigen Funkstation (BS2) unter Verwendung des anderen Teils (T) der Funkressourcen (FMZ) erfolgt.

9. Verfahren nach einem der Ansprüche 1 bis 8, bei dem
vor der Versendung des Signalisierungssignals die erste netzseitige Funkstation (BS1) der zweiten netzseitigen Funkstation (BS2) Informationen betreffend den anderen Teil (T) der Funkressourcen (FMZ) sendet.

10. Verfahren nach Anspruch 9, bei dem
die zweite netzseitige Funkstation (BS2) nach dem Empfang der Informationen betreffend den anderen Teil (T) der Funkressourcen (FMZ) mit der Versendung des Signalisierungssignals beginnt.

11. Verfahren nach einem der Ansprüche 1 bis 10, bei dem
nach dem Handover die zweite netzseitige Funkstation (BS2) der Teilnehmerstation (MS) von den Funkressourcen (FMZ) unterschiedliche Funkressourcen zuweist.

12. Verfahren nach einem der Ansprüche 1 bis 11, bei dem
vor der Zuweisung der Funkressourcen (FMZ) die erste netzseitige Funkstation (BS1) eine Nachricht von der Teilnehmerstation (MS) empfängt betreffend das Handover der Kommunikation der Teilnehmerstation (MS) von der ersten netzseitigen Funkstation (BS1) zu der zweiten netzseitigen Funkstation (BS2).

13. Verfahren nach einem der Ansprüche 1 bis 12, bei dem
vor der Zuweisung der Funkressourcen (FMZ) eine Kommunikation zwischen der ersten netzseitigen Funkstation (BS1) und der Teilnehmerstation (MS) unter Verwendung von von den Funkressourcen (FMZ) unterschiedlichen Funkressourcen erfolgt.

14. Verfahren nach einem der Ansprüche 1 bis 13, bei dem
die erste netzseitige Funkstation (BS1) die den Empfang des Signals bestätigende Nachricht (REC) der Teilnehmerstation (MS) empfängt und der zweiten netzseitigen Funkstation (BS2) eine Anweisung zur Durchführung des Handovers sendet.

15. Verfahren nach einem der Ansprüche 1 bis 13, bei dem
die zweite netzseitige Funkstation (BS2) die den Empfang des Signals bestätigende Nachricht (REC) der Teilnehmerstation (MS) empfängt und der ersten netzseitigen Funkstation (BS1) eine Anweisung zur Durchführung des Handovers sendet.

16. Verfahren nach einem der Ansprüche 1 bis 15, bei dem
es sich bei der Kommunikation der Teilnehmerstation (MS) um eine Kommunikation in Abwärtsrichtung handelt.

17. Teilnehmerstation (MS) zur Kommunikation per Funk, mit
Mitteln zum Empfangen von Informationen (RES) von einer ersten netzseitigen Funkstation (BS1) betreffend eine Zuweisung von Funkressourcen (FMZ) an die Teilnehmerstation (MS) und mit Mitteln zum Kommunizieren mit der ersten netzseitigen Funkstation (BS1) unter Verwendung eines Teils der Funkressourcen (FMZ),
Mitteln zum Empfangen unter Verwendung eines anderen Teils (T) der Funkressourcen (FMZ) eines ausschließlich für die Teilnehmerstation (MS) bestimmten Signalisierungssignals von einer zweiten netzseitigen Funkstation (BS2),
Mitteln zum Senden einer den Empfang des Signalisierungssignals bestätigenden Nachricht (REC) an die erste netzseitige Funkstation (BS1) und/oder an die zweite netzseitige Funkstation (BS2), und
Mitteln zum Durchführen eines Handovers der Kommunikation der Teilnehmerstation (MS) von der ersten netzseitigen Funkstation (BS1) zu der zweiten netzseitigen Funkstation (BS2).

18. Funkkommunikationssystem umfassend eine erste (BS1) und eine zweite (BS2) netzseitige Funkstation,
mit Mitteln der ersten netzseitigen Funkstation (BS1) zum Zuweisen von Funkressourcen (FMZ) an eine Teilnehmerstation (MS) und mit Mitteln zum Kommunizieren mit der Teilnehmerstation (MS) unter Verwendung eines Teils der Funkressourcen (FMZ),
mit Mitteln der zweiten netzseitigen Funkstation (BS2) zum Versenden eines ausschließlich für die Teilnehmerstation (MS) bestimmten Signalisierungssignals unter Verwendung eines anderen Teils (T) der Funkressourcen (FMZ), mit Mitteln der ersten netzseitigen Funkstation (BS1) und/oder der zweiten netzseitigen Funkstation (BS2) zum Empfangen einer den Empfang des Signalisierungssignals bestätigenden Nachricht (REC) der Teilnehmerstation (MS), mit Mitteln der ersten netzseitigen Funkstation (BS1) und der zweiten netzseitigen Funkstation (BS2) zum Durchführen eines Handovers der Kommunikation der Teilnehmerstation (MS) von der ersten netzseitigen Funkstation (BS1) zu der zweiten netzseitigen Funkstation (BS2) auf die Nachricht der Teilnehmerstation (MS) hin.
